# FASCICULE DE BREVET EUROPEEN

(11) **EP 2 596 966 B1**
(45) Date de publication et mention de la délivrance du brevet: **03.02.2016**
(21) Numéro de dépôt: 12193900.3
(22) Date de dépôt: 22.11.2012
(51) Int. Cl.: B60D 1/02, B60D 1/06, B60D 1/07, B60D 1/48, B60D 1/52

(54) **Ensemble d'attelage pour véhicule automobile de traction**
Anhängerkupplungsanordnung für Zugkraftfahrzeug
Hitching assembly for a towing motor vehicle

(30) Priorité: 25.11.2011 FR 1160812
(43) Date de publication de la demande: 29.05.2013
(73) Titulaire: Ur'ben, 12800 Naucelle (FR)
(72) Inventeur: Feral, Jean-Marc, 12330 Valady (FR); Flottes, Joël, 12120 Meljac (FR); Gaffard, Benjamin, 12000 Rodez (FR); Cavallari, Philippe, 81000 Albi (FR)
(74) Mandataire: Hartmann, Jean-Luc

(56) Documents cités:
- DE-U- 7 339 956
- FR-A1- 2 740 079
- GB-A- 2 167 365
- NL-A- 7 901 094
- NL-C2- 1 025 746

## Description

La présente invention concerne un ensemble d'attelage pour véhicule automobile de traction.

Les ensembles d'attelage concernés par la présente invention sont plus particulièrement les ensembles comportant deux modes d'attelage distincts pour remorquer un véhicule tracté de manière à pouvoir atteler deux types de remorques différents.

Le document FR-2 740 079 montre le préambule de la revendication 1 et divulgue un attelage hippomobile qui présente deux moyens d'attelage d'un même type. L'ensemble proposé dans ce document nécessite une adaptation à la fois du véhicule qui tracte et de l'ensemble tracté.

Les documents GB-2 167 365 et DE-73 39 956 U présentent chacun un attelage double. Ils ne révèlent pas comment les dispositifs divulgués sont montés sur un véhicule de traction. En outre, les solutions proposées dans ce document ne permet aucune adaptation de hauteur entre les moyens permettant de réaliser un premier mode d'attelage et les moyens permettant de réaliser un second mode d'attelage.

L'invention vise alors à fournir un ensemble d'attelage offrant deux modes d'attelage différents à des hauteurs de montage spécifiques tout en ayant un mode unique de liaison avec un châssis de véhicule de traction.

L'invention a également pour but de fournir un tel ensemble d'attelage dans lequel la traction de la remorque s'effectue dans tous les cas dans le plan médian du véhicule. En conséquence, il se produit au freinage et à l'accélération un couple de torsion dans l'attelage. Ce dernier doit donc être conçu de manière à résister à ce couple cyclique, notamment en fatigue.

Avantageusement, l'invention permettra d'atteler au choix une remorque disposant d'un système d'attelage à boule normalisé, ou d'un système d'attelage non normalisé à chape.

L'invention a également pour but de fournir un véhicule automobile de traction muni d'un ensemble d'attelage qui permette d'atteler au choix des remorques disposant de types d'attelage distincts.

À cet effet, elle propose un ensemble d'attelage pour véhicule automobile de traction, comportant des premiers moyens d'attelage ainsi que des seconds moyens d'attelage disposés les uns au-dessus des autres.

Selon la présente invention, les premiers moyens d'attelage et les seconds moyens d'attelage sont fixés sur une plaque de montage ; la plaque de montage est fixée sur une barre d'attelage à l'aide de moyens de fixation comportant deux équerres présentant chacune une première aile et une seconde aile, les premières ailes des équerres étant fixées sur deux faces opposées de la barre d'attelage et les deux secondes ailes définissant un plan sur lequel est fixé la plaque de montage.

Il est possible d'offrir ainsi deux points de fixation pour deux modes d'attelage différents, à des hauteurs de montage spécifiques différentes tout en ayant un mode unique de liaison avec un châssis de véhicule tracteur. De la sorte, un véhicule tracteur pourvu d'un seul emplacement pour recevoir une traverse remorquante peut atteler de façon optimale deux types de remorques dans des conditions optimales (hauteur adaptée à chaque type d'attelage).

Par barre d'attelage, on entend tout longeron, poutre, de type traverse, à fonction d'attelage, rapporté sur le châssis du véhicule ou faisant partie intégrante de celui-ci. Le châssis peut être un châssis de type à longeron, ou mécano-soudé, tubulaire, ou de type châssis-coque, ou plus généralement toute structure portante de véhicule.

Pour une plus grande modularité de l'ensemble, les moyens de fixation de la plaque de montage sur la barre d'attelage sont des moyens de fixation démontables. On peut alors envisager de changer la plaque de montage pour adapter les hauteurs des points de traction et/ou de changer les moyens d'attelage sur la plaque de montage.

Une forme de réalisation particulière prévoit alors que les équerres sont boulonnées sur la barre d'attelage. Dans cette forme de réalisation, les équerres sont par exemple fixées sur la barre d'attelage à l'aide de boulons traversant la barre d'attelage verticalement de part en part.

Pour ce qui concerne la liaison entre la plaque de montage et les équerres, on peut à titre d'exemples prévoir que :
- la plaque de montage est boulonnée sur les équerres,
- la plaque de montage et les équerres sont soudées pour former un organe de montage d'une seule pièce,
- la plaque de montage et les équerres sont forgées pour former un organe de montage d'une seule pièce.

Un ensemble d'attelage selon l'invention peut aussi comporter en outre des moyens de fixation de la barre d'attelage ; lesdits moyens de fixation comprennent par exemple deux ensembles de fixation présentant chacun une joue de montage sensiblement perpendiculaire à la barre d'attelage, ladite joue de montage possédant, d'un côté, des moyens de montage à un châssis de véhicule automobile de traction et, d'un autre côté, des moyens de serrage sur la barre d'attelage.

Dans un tel ensemble d'attelage, on peut alors prévoir que les moyens de serrage comprennent une plaque d'appui pour recevoir la barre d'attelage et une bride de serrage boulonnée sur la plaque d'appui.

A titre d'exemple non limitatif, les premiers moyens d'attelage se présentent par exemple sous la forme d'un attelage à boule et/ou les seconds moyens d'attelage se présentent sous la forme d'un attelage à chape.

Enfin, la présente invention concerne également un véhicule automobile de traction, caractérisé en ce qu'il comprend un ensemble d'attelage tel que décrit ci-dessus.

Des détails et avantages de la présente invention apparaitront mieux de la description qui suit, faite en référence au dessin schématique annexé sur lequel :
La figure 1 est une vue en perspective d'un ensemble d'attelage selon l'invention monté à l'arrière d'un véhicule représenté schématiquement par ses roues arrière et deux longerons de châssis,
La figure 2 en est une vue de côté,
La figure 3 en est une vue arrière,
La figure 4 illustre une vue arrière selon un autre mode de montage,
La figure 5 illustre l'adaptation à l'ensemble d'attelage d'une remorque équipée d'un système d'attelage à boule,
La figure 6 illustre l'adaptation à l'ensemble d'attelage d'une remorque équipée d'un système d'attelage à chape,
La figure 7 est une vue éclatée de l'ensemble d'attelage de la figure 1,
La figure 7A est une vue à plus grande échelle du détail A de la figure 7,
La figure 7B est une vue à plus grande échelle du détail B de la figure 7,
La figure 8 illustre le montage de divers équipements sur l'ensemble d'attelage de la figure 1, et
La figure 9 est une vue en perspective d'un autre mode de réalisation des moyens de montage.

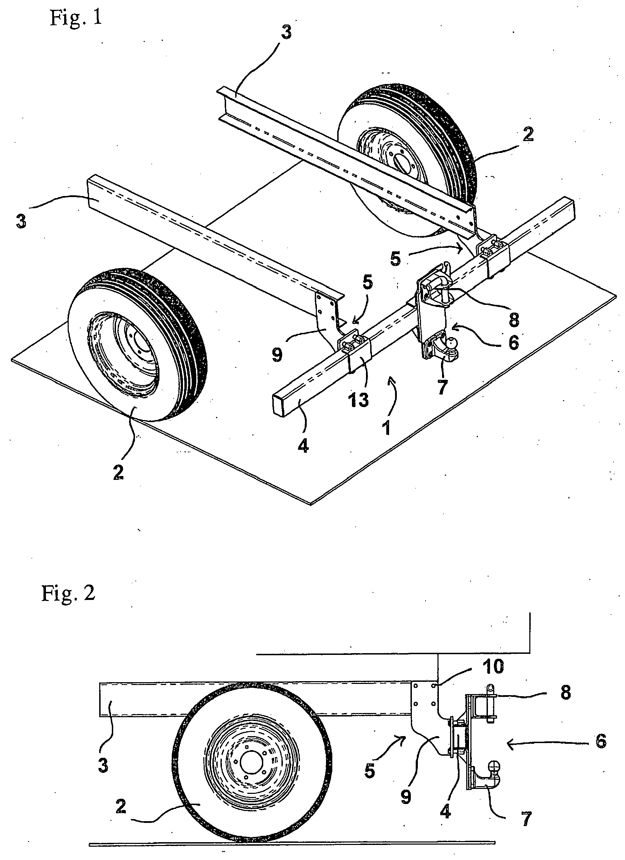

Les figures 1 et 2 illustrent un ensemble d'attelage 1 monté à l'arrière d'un véhicule de traction dont seuls sont représentés deux roues arrière 2 et deux longerons 3 de châssis.

L'ensemble d'attelage 1 comporte une barre d'attelage 4, des moyens de fixation 5 de la barre d'attelage 4 aux longerons 3 et des moyens d'attelage 6. La barre d'attelage 4 est formée ici d'un profilé à section tubulaire, par exemple rectangulaire, mais d'autres types de sections de profilés pourraient être utilisés. La barre d'attelage 4 est de préférence dimensionnée pour assurer en outre une fonction anti-encastrement arrière du véhicule tracteur.

Dans la forme de réalisation représentée sur les figures, les moyens d'attelage 6 comprennent un attelage à boule 7 normalisé et un attelage à chape 8 de tout type connu.

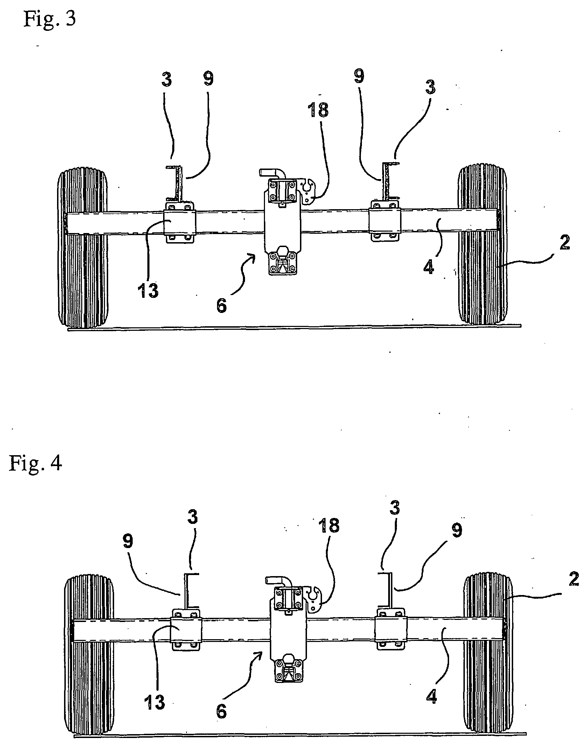

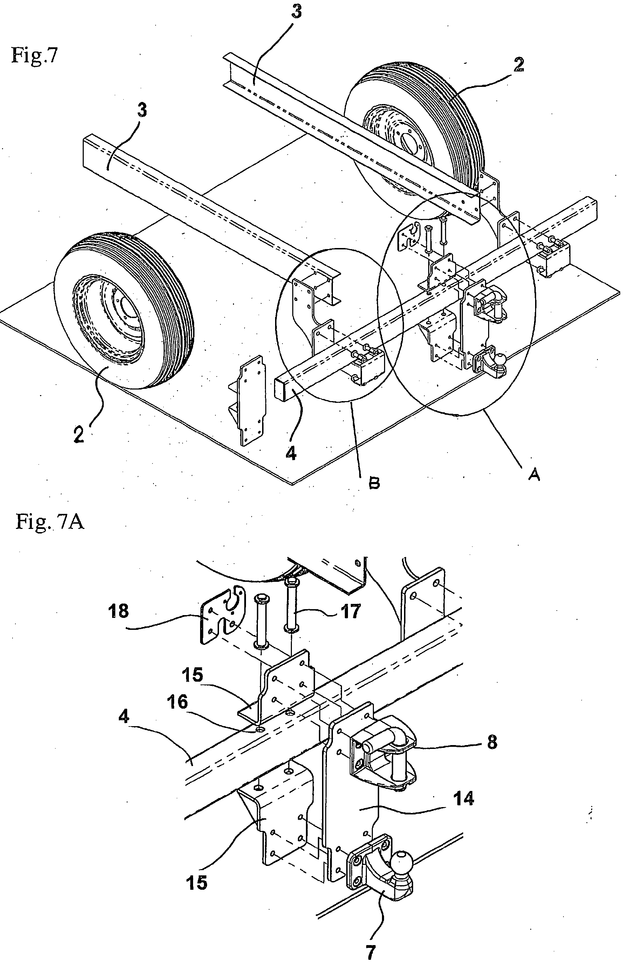

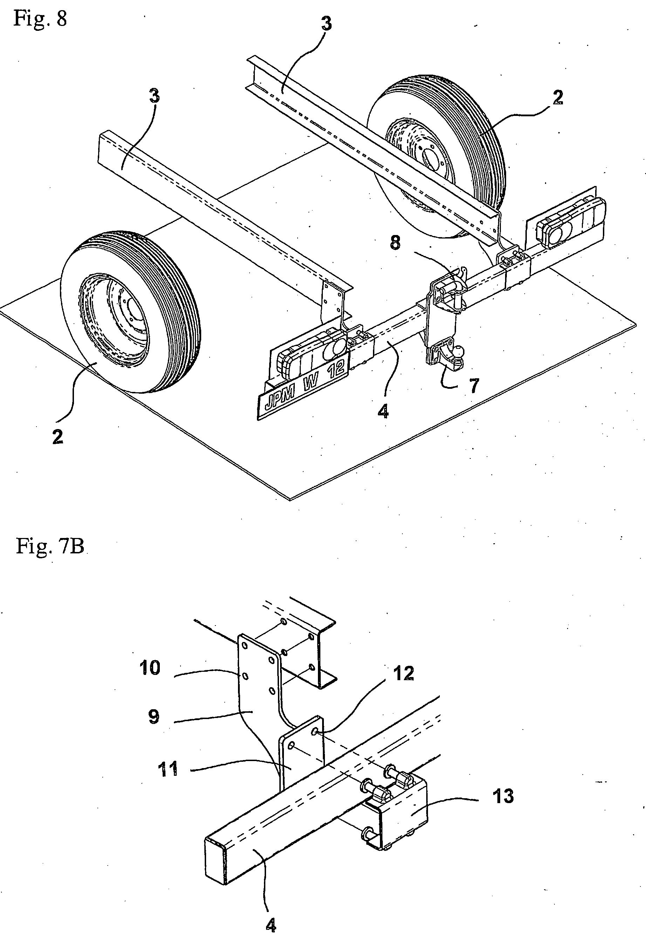

Comme illustré par exemple sur les figures 1 et 7, les moyens de fixation 5 de la barre d'attelage 4 aux longerons 3 comprennent deux ensembles de fixation comprenant chacun une joue de montage 9 formée d'une plaque coudée ayant à l'une de ses extrémités des moyens de montage sur le châssis qui comportent des trous 10 permettant un boulonnage sur un longeron 3. On voit à la figure 3 une fixation des joues 9 de manière intérieure aux longerons 3 de châssis et à la figure 4 une fixation de manière extérieure aux longerons 3 de châssis. À son autre extrémité, chaque joue 9 présente une plaque d'appui 11 soudée qui lui est perpendiculaire et qui est percée de trous 12 (comme représenté sur la figure 7B) formant ainsi des moyens utilisés pour réaliser un serrage de la barres d'attelage 4. Les joues 9 sont fixées parallèlement au plan médian du véhicule de sorte que les plaques d'appui 11 font face à l'arrière. Chaque joue 9 est adaptée à une interface de reprise sur le châssis, ou à une interface d'intégration à celui-ci le cas échéant.

Chaque ensemble de fixation comporte en outre une bride 13 à section en U boulonnée dans les trous 12 de la plaque d'appui 11 correspondante de manière à emprisonner et à serrer la barre d'attelage 4. Cette dernière peut donc être positionnée à volonté perpendiculairement au plan médian du véhicule de manière que les moyens d'attelage 6 soient dans ce plan médian, et ce quel que soit l'écartement des longerons 3. La bride de fixation peut adopter la forme d'un ou plusieurs étriers à section filaire par exemple.

Les joues 9 de montage sont de préférence dimensionnées de manière que la barre d'attelage 4 soit positionnée pour assurer en outre la fonction anti-encastrement arrière du véhicule tracteur.

Les moyens d'attelage (attelage à boule 7 et attelage à chape 8) sont montés sur la barre d'attelage 4 par des moyens de montage comportant essentiellement une plaque de montage 14 et deux équerres 15 boulonnées. Chaque équerre 15 présente une première aile et une seconde aile. La barre d'attelage 4 est percée de trous 16 pour le passage vertical de boulons 17. Des trous sont aussi percés dans la première aile de chaque équerre permettant de fixer chaque équerre 15 par sa première aile, les équerres 15 étant positionnées de telle manière que les secondes ailes font face à l'arrière en se trouvant sensiblement dans un même plan vertical, permettant ainsi un boulonnage de la plaque de montage 14. Des boulons similaires de montage de la plaque de montage 14 assurent la fixation des moyens d'attelage, ainsi que d'un support 18 de prise électrique d'attelage et de crochet pour le câble de frein de secours. Suivant les boulons de montage utilisés pour cette dernière fonction, le support 18 peut occuper différentes positions pour s'adapter à la remorque à tracter. Les équerres 15 peuvent assurer également le rôle de pièces de renfort dont l'inertie est appropriée selon les besoins, notamment en fonction de la charge à tracter. Les équerres 15 peuvent être réalisées par pliage ou par forgeage.

Les moyens de montage des moyens d'attelage sur la barre d'attelage 4 définissent la position relative des deux moyens d'attelage pour qu'elle soit compatible avec les zones de dégagement exigées par les normes d'attelage de chacun des modes d'attelage.

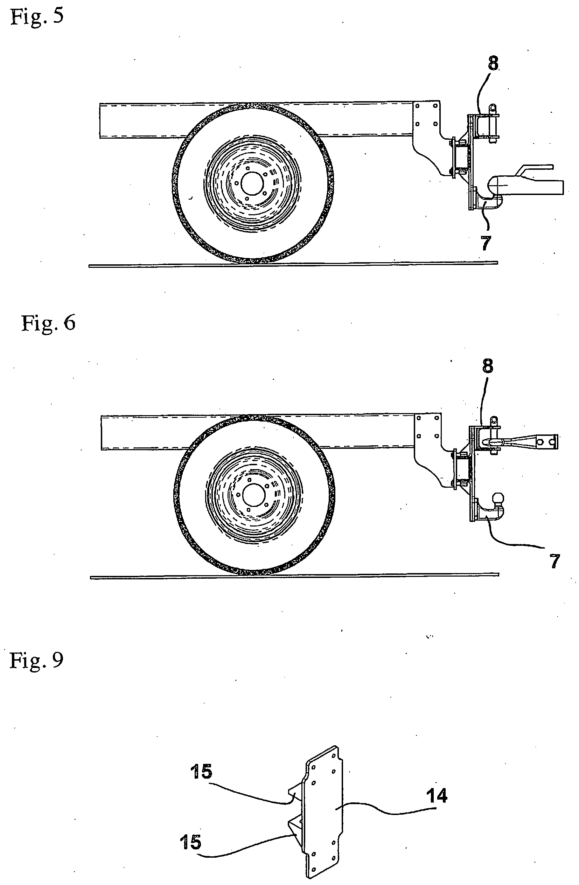

On voit à la figure 9 un autre mode de réalisation dans lequel les équerres 15 et la plaque de montage 14 sont soudées pour former une seule pièce monobloc. Une telle pièce monobloc peut également être obtenue par forgeage.

On voit enfin à la figure 8 qu'un système de bridage tel que décrit et représenté permet le support sur la barre d'attelage 4 de feux, de radars de recul, d'une plaque d'immatriculation ou d'une signalisation complémentaire.

Comme il ressort de la description qui précède, un dispositif selon la présente invention permet d'offrir deux points de fixation pour deux modes d'attelage différents et ceci à des hauteurs de montage spécifiques différentes tout en ayant un mode unique de liaison avec un châssis d'un véhicule tracteur. Cela procure l'avantage aux véhicules tracteurs pourvus d'un seul emplacement pour traverse remorquante de pouvoir atteler de façon optimale deux types de remorques (par exemple attelage à boule "type caravane" à altitude normalisée et attelage à oeil à altitude non normalisée et usuellement beaucoup plus haute).

Le dispositif décrit présente, d'une part, une traverse rectangulaire (la barre d'attelage) et, d'autre part, un support qui dédouble les fixations d'attelage. Ces deux pièces sont liées de préférence par deux boulons traversant la traverse rectangulaire verticalement de part en part.

Le système de bridage avec des joues de montage pour la fixation de la barre d'attelage sur le véhicule, ou plus précisément des longerons d'un véhicule dans le mode décrit et illustré, permet de réaliser de manière continue tous les entraxes de "joue de châssis" afin de s'adapter à n'importe quel largeur de châssis de véhicule tracteur et peut se fixer aussi bien côté intérieur ou côté extérieur des longerons qui constituent le châssis du véhicule tracteur.

En adaptant les dimensions de la traverse rectangulaire, cette dernière peut remplir en plus de sa fonction de support pour le dispositif d'attelage, la fonction de dispositif anti-encastrement arrière pour le véhicule tracteur (hauteur 100 mm, altitude de la surface inférieure à moins 550 mm du sol, extrémités à moins de 100 mm de la largeur des pneumatiques).

Dans le dispositif décrit ci-dessus, les deux boulons traversants déterminent la position de montage des attelages pour qu'ils se situent exactement sur le plan médian longitudinal du véhicule tracteur.

Comme évoqué plus haut, le dispositif selon l'invention présente l'avantage de permettre une fixation par boulonnage d'un support supplémentaire permettant d'offrir une fixation à une prise électrique d'attelage et d'un crochet pour le câble de frein de secours, ceci à différentes positions pour s'adapter à la remorque à tracter.

Un dispositif selon l'invention permet d'adapter la position relative de deux modes d'attelage pour qu'elle soit compatible avec des zones de dégagement exigées par les normes d'attelage de chacun des modes d'attelage.

L'invention permet aussi grâce à un système de bridage similaire à celui de la traverse rectangulaire de réaliser simplement un support pour des feux du véhicule tracteur, des radars de reculs, une plaque d'immatriculation ou une signalisation complémentaire.

On a ainsi un système très simple, modulable et répondant aux exigences techniques d'un attelage.

Bien entendu, la présente invention ne se limite pas à la forme de réalisation préférée décrite ci-dessus à titre d'exemple non limitatif et aux variantes évoquées. Elle concerne également toutes les variantes de réalisation à la portée de l'homme du métier dans le cadre des revendications ci-après.

## Revendications

1. Ensemble d'attelage pour véhicule automobile de traction, comportant des premiers moyens d'attelage (7 ; 8) ainsi que des seconds moyens d'attelage (8 ; 7) disposés les uns au-dessus des autres,
**caractérisé en ce que** les premiers moyens d'attelage et les seconds moyens d'attelage sont fixés sur une plaque de montage,
**en ce que** la plaque de montage est fixée sur une barre d'attelage à l'aide de moyens de fixation comportant deux équerres présentant chacune une première aile et une seconde aile, les premières ailes des équerres étant fixées sur deux faces opposées de la barre d'attelage et les deux secondes ailes définissant un plan sur lequel est fixé la plaque de montage.

2. Ensemble d'attelage selon la revendication 1, **caractérisé en ce que** les moyens de fixation de la plaque de montage sur la barre d'attelage sont des moyens de fixation démontables.

3. Ensemble d'attelage selon l'une des revendications 1 ou 2, **caractérisé en ce que** les équerres (15) sont boulonnées sur la barre d'attelage (4).

4. Ensemble d'attelage selon la revendication 3, **caractérisé en ce que** les équerres (15) sont fixées sur la barre d'attelage (4) à l'aide de boulons traversant la barre d'attelage verticalement de part en part.

5. Ensemble d'attelage selon l'une quelconque des revendications 1 à 4, **caractérisé en ce que** la plaque de montage (14) est boulonnée sur les équerres (15).

6. Ensemble d'attelage selon l'une quelconque des revendications 1 à 4, **caractérisé en ce que** la plaque de montage (14) et les équerres (15) sont soudées pour former un organe de montage d'une seule pièce.

7. Ensemble d'attelage selon l'une quelconque des revendications 1 à 4, **caractérisé en ce que** la plaque de montage et les équerres sont forgées pour former un organe de montage d'une seule pièce.

8. Ensemble d'attelage selon l'une des revendications 1 à 7, **caractérisé en ce qu'**il comporte en outre des moyens de fixation de la barre d'attelage (4), **en ce que** lesdits moyens de fixation comprennent deux ensembles de fixation présentant chacun une joue de montage (9) sensiblement perpendiculaire à la barre d'attelage, ladite joue de montage possédant, d'un côté, des moyens de montage (10) à un châssis de véhicule automobile de traction et, d'un autre côté, des moyens de serrage (11) sur la barre d'attelage (4).

9. Ensemble d'attelage selon la revendication 8, **caractérisé en ce que** les moyens de serrage comprennent une plaque d'appui (11) pour recevoir la barre d'attelage (4) et une bride de serrage (13) boulonnée sur la plaque d'appui (11).

10. Ensemble d'attelage selon l'une des revendications 1 à 9, **caractérisé en ce que** les premiers moyens d'attelage se présentent sous la forme d'un attelage à boule (7).

11. Ensemble d'attelage selon l'une des revendications 1 à 10, **caractérisé en ce que** les seconds moyens d'attelage se présentent sous la forme d'un attelage à chape (8).

12. Véhicule automobile de traction, **caractérisé en ce qu'**il comprend un ensemble d'attelage selon l'une des revendications précédentes.

## Patentansprüche

1. Anhängerkupplungsanordnung für ein Zugkraftfahrzeug, umfassend erste Kopplungsmittel (7; 8) sowie zweite Kopplungsmittel (8; 7), die übereinander angeordnet sind, **dadurch gekennzeichnet, dass** die ersten Kopplungsmittel und die zweiten Kopplungsmittel an einer Montageplatte befestigt sind, und dass die Montageplatte an einer Kupplungsstange über Befestigungsmittel befestigt ist, die zwei Winkel umfassen, welche jeweils einen ersten Flügel und einen zweiten Flügel aufweisen, wobei die ersten Flügel der Winkel an zwei einander gegenüberliegenden Flächen der Kupplungsstange befestigt sind und die beiden zweiten Flügel eine Ebene festlegen, an der die Montageplatte befestigt ist.

2. Anhängerkupplungsanordnung nach Anspruch 1, **dadurch gekennzeichnet, dass** die Mittel zur Befestigung der Montageplatte an der Kupplungsstange abnehmbare Befestigungsmittel sind.

3. Anhängerkupplungsanordnung nach einem der Ansprüche 1 oder 2, **dadurch gekennzeichnet, dass** die Winkel (15) mit der Kupplungsstange (4) verbolzt sind.

4. Anhängerkupplungsanordnung nach Anspruch 3, **dadurch gekennzeichnet, dass** die Winkel (15) an der Kupplungsstange (4) mittels Bolzen befestigt sind, die vertikal von einer Seite zur anderen durch die Kupplungsstange hindurch laufen.

5. Anhängerkupplungsanordnung nach einem der Ansprüche 1 bis 4, **dadurch gekennzeichnet, dass** die Montageplatte (14) mit den Winkeln (15) verbolzt ist.

6. Anhängerkupplungsanordnung nach einem der Ansprüche 1 bis 4, **dadurch gekennzeichnet, dass** die Montageplatte (14) und die Winkel (15) verschweißt sind, um ein einstückiges Montageorgan zu bilden.

7. Anhängerkupplungsanordnung nach einem der Ansprüche 1 bis 4, **dadurch gekennzeichnet, dass** die Montageplatte und die Winkel geschmiedet sind, um ein einstückiges Montageorgan zu bilden.

8. Anhängerkupplungsanordnung nach einem der Ansprüche 1 bis 7, **dadurch gekennzeichnet, dass** sie ferner Mittel zur Befestigung der Kupplungsstange (4) umfasst, und dass die Befestigungsmittel zwei Befestigungsanordnungen umfassen, die jeweils eine Montagewange (9) im wesentlichen senkrecht zur Kupplungsstange aufweisen, wobei die Montagewange einerseits Mittel (10) zur Montage an einer Zugkraftfahrzeugkarosserie und andererseits Klemmmittel (11) an der Kupplungsstange (4) besitzt.

9. Anhängerkupplungsanordnung nach Anspruch 8, **dadurch gekennzeichnet, dass** die Klemmmittel eine Auflageplatte (11) zur Aufnahme der Kupplungsstange (4) und einen mit der Auflageplatte (11) verbolzten Klemmflansch (13) umfassen.

10. Anhängerkupplungsanordnung nach einem der Ansprüche 1 bis 9, **dadurch gekennzeichnet, dass** die ersten Kopplungsmittel in Form einer Kugelkopfkupplung (7) vorliegen.

11. Anhängerkupplungsanordnung nach einem der Ansprüche 1 bis 10, **dadurch gekennzeichnet, dass** die zweiten Kopplungsmittel in Form einer Bolzenkupplung (8) vorliegen.

12. Zugkraftfahrzeug, **dadurch gekennzeichnet, dass** es eine Kupplungsanordnung nach einem der vorhergehenden Ansprüche umfasst.

## Claims

1. Hitching assembly for a towing motor vehicle, comprising first hitching means (7; 8) as well as second hitching means (8; 7) arranged one above the other, **characterised in that** the first hitching means and the second hitching means are fixed on a mounting plate,
wherein the mounting plate is fixed on a hitching bar with the aid of fixing means comprising two angle irons, each comprising a first wing and a second wing, the first wings of the angle irons being fixed on two opposing faces of the hitching bar and the two second wings defining a surface on which the mounting plate is fixed.

2. Hitching assembly according to claim 1, **characterised in that** the fixing means of the mounting plate on the hitching bar are detachable fixing means.

3. Hitching assembly according to any one of claims 1 or 2, **characterised in that** the angle irons (15) are bolted to the hitching bar (4).

4. Hitching assembly according to claim 3, **characterised in that** the angle irons (15) are fixed on the hitching bar (4) with the aid of bolts which traverse the hitching bar vertically from one side to the other.

5. Hitching assembly according to any one of claims 1 to 4, **characterised in that** the mounting plate (14) is bolted to the angle irons (15).

6. Hitching assembly according to any one of claims 1 to 4, **characterised in that** the mounting plate (14) and the angle irons (15) are welded such as to form a mounting element of one single piece.

7. Hitching assembly according to any one of claims 1 to 4, **characterised in that** the mounting plate and the angle irons are forged such as to form a mounting element of one single piece.

8. Hitching assembly according to any one of claims 1 to 7, **characterised in that** it additionally comprises fixing means for the hitching bar (4), **in that** said fixing means comprise two fixing assemblies, each comprising a mounting flange (9) essentially perpendicular to the hitching bar, said mounting flange comprising, on one side, means (10) for attachment to a chassis of a towing motor vehicle, and, on the other side, means (11) for locking onto the hitching bar (4).

9. Hitching assembly according to claim 8, **characterised in that** the locking means comprise a support plate (11) for receiving the hitching bar (4) and a locking flange (13) bolted onto the support plate (11).

10. Hitching assembly according to any one of claims 1 to 9, **characterised in that** the first hitching means are configured in the form of a ball hitch (7).

11. Hitching assembly according to any one of claims 1 to 10, **characterised in that** the second hitching means are configured in the form of a fork hitch (8).

12. Towing motor vehicle, **characterised in that** it comprises a hitching assembly according to any one of the preceding claims.
